# EUROPEAN PATENT APPLICATION

(11) **EP 4 653 746 A1**
(43) Date of publication of application: **26.11.2025**
(21) Application number: 24177990.9
(22) Date of filing: 24.05.2024
(51) Int. Cl.: F16M 11/04, F16M 13/02, F16M 11/22, F16M 13/04, F16M 11/16, E05B 73/00, F21V 21/00, G01D 11/30, G08B 13/196, G12B 9/00, H01Q 1/00

(54) **A MOUNTING SYSTEM**

(71) Applicant: Vaisala, OYJ, 00421 Helsinki (FI)
(72) Inventor: KYNNÖS, Kimmo, 01620 VANTAA (FI); KETTUNEN, Joni, 01660 VANTAA (FI)
(74) Representative: Berggren Oy

(57) **Abstract**

A system (100) for releasably mounting a device, comprising: a mounting base (110) and a mounting adapter (120) of the device, the mounting base (110) comprising a mounting plate (111) and the mounting adapter (120) comprising a mounting surface (125) for placement against the mounting plate (111) when the mounting adapter (120) is mounted to the mounting base (110); and an installation key (130) for temporary attachment to the mounting adapter (120), the installation key (130) comprising a tubular shaft (131) and one or more radially extending protrusions (132), wherein the mounting surface (125) comprises a recess (121) for receiving a locking member (133) arranged in the first end of the shaft (131) and a locking mechanism arranged to secure the installation key (130) to the mounting adapter (120) upon receiving the locking member (133) and arranged to release the installation key (130) upon rotation of the shaft (131) with respect to the mounting adapter (120), and wherein the mounting plate (111) has an opening (112) to allow for longitudinal movement of the shaft (131) therethrough, the opening (112) having an outline that allows for the radially extending protrusions (132) to pass through the opening (112) in at least one orientation of the shaft (131), that prevents rotation of the shaft (131) when the extension segment is aligned with the mounting plate (111) and that allows for rotation of the shaft (131) when the extension segment is not aligned with the mounting plate (111).

## Description

### TECHNICAL FIELD

The present invention relates to a mounting system that is applicable for releasable mounting of a device to a mounting assembly.

### BACKGROUND

Many electronic devices applied in the field for the purpose of collecting information about the environment, such as instruments applied for collecting sensor data descriptive of air quality or meteorological information and surveillance cameras, benefit from installation at a height where they cannot be physically accessed by a person standing on the ground. For many electric devices installation at such a height, e.g. a few meters above the ground, is directly beneficial to their operation, while an additional benefit of such an installation height is that it makes it more difficult for unauthorized persons to physically access and interfere with the device.

On the other hand, many such electronic devices require subsequent maintenance and its installation at a height of several meters quite apparently requires special measures for a maintenance person physically accessing the device. Consequently, an aerial work platform or a mobile elevated working platform of other kind is in many cases required for lifting the maintenance person to a height that enables physically accessing the device to carry out the maintenance or to dismount the device for carrying out the maintenance at another location. However, in many scenarios the device is installed in a location that makes usage of such lifting equipment inconvenient or even impossible: as an example in this regard, using such lifting equipment to physically access a device mounted to a pole or mast residing at a side of a road typically requires suspending the traffic on the road for the duration of maintenance, which results in inconvenience to the public and typically also incurs additional costs. As another example, a device mounted in a location that is not accessible by a road typically makes it difficult or even impossible to transport the lifting equipment at the site.

Therefore, new techniques for mounting and dismounting such electrical devices at installation heights that do not enable direct physical access thereto from the ground level would be beneficial to facilitate convenient and affordable manner of carrying out maintenance to the electrical devices.

### SUMMARY

It is an object of the present invention to provide a mounting system that enables robust, safe and affordable mounting and dismounting of an electronic device also at installation heights that are not physically accessible from the ground level by a human operator.

According to an example embodiment, a system for releasably mounting a device is provided, the system comprising: a mounting base and a mounting adapter of the device, the mounting base comprising mounting plate for supporting the mounting adapter and the mounting adapter comprising a mounting surface for placement against the mounting plate when the mounting adapter is mounted to the mounting base; and an installation key for temporary attachment to the mounting adapter for moving the device, the installation key comprising a substantially tubular shaft provided with an extension segment that covers a portion of a predefined length along the shaft at a predefined distance from its first end and comprises one or more radially extending protrusions, wherein the mounting surface comprises a recess for receiving a locking member arranged in the first end of the shaft and a locking mechanism arranged to secure the installation key to the mounting adapter upon receiving the locking member and arranged to release the installation key upon rotation of the shaft with respect to the mounting adapter, and wherein the mounting plate has an opening to allow for longitudinal movement of the shaft therethrough, the opening having an outline that allows for the one or more radially extending protrusions to pass through the opening in at least one orientation of the shaft, that prevents rotation of the shaft when the extension segment is aligned with the mounting plate and that allows for rotation of the shaft when the extension segment is not aligned with the mounting plate.

The exemplifying embodiments of the invention presented in this patent application are not to be interpreted to pose limitations to the applicability of the appended claims. The verb "to comprise" and its derivatives are used in this patent application as an open limitation that does not exclude the existence of also unrecited features. The features described hereinafter are mutually freely combinable unless explicitly stated otherwise.

Some features of the invention are set forth in the appended claims. Aspects of the invention, however, both as to its construction and its method of operation, together with additional objects and advantages thereof, will be best understood from the following description of some example embodiments when read in connection with the accompanying drawings.

### BRIEF DESCRIPTION OF FIGURES

The embodiments of the invention are illustrated by way of example, and not by way of limitation, in the figures of the accompanying drawings, where
Figure 1A illustrates a mounting base according to an example;
Figure 1B illustrates a mounting adapter according to an example;
Figure 1C illustrates an installation key according to an example;
Figure 2 illustrates an arrangement of elements of a mounting system according to an example;
Figure 3A illustrates a mounting base according to an example;
Figure 3B illustrates a mounting adapter according to an example;
Figure 4 illustrates a mounting plate according to an example; and
Figures 5A, 5B and 5C illustrate some aspects of operation of a mounting system according to an example.

### DESCRIPTION OF SOME EMBODIMENTS

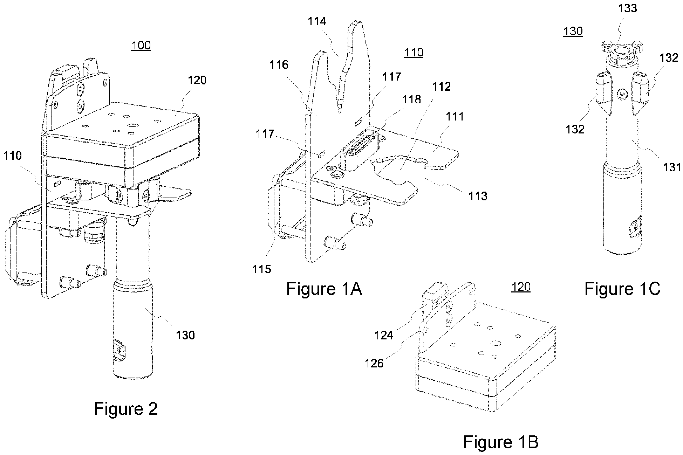

Figures 1A, 1B and 1C illustrate respective elements of a mounting system 100 according to an example, whereas the system 100 is provided for releasably mounting an electronic device, such as a surveillance camera, a sensor apparatus, an element of a wireless communication system, a light fixture, etc. In the following, the electronic device is referred to, in brief, as the device. Figure 1A illustrates a mounting base 110 according to an example. The mounting base 110 is provided for attachment to a supporting structure and for supporting the device when mounted thereto. Figure 1B illustrates a mounting adapter 120 according to an example. The mounting adapter 120 is attached to the device or it is integrated to the device and it enables releasable mounting of the device to the mounting base 110. Figure 1C illustrates an installation key 130 according to an example. The installation key 130 comprises a substantially tubular shaft 131 provided with one or more radially extending protrusions 132. The installation key 130 is provided for temporary attachment to the mounting adapter 120 and hence to the device to enable mounting the device to the mounting base 110 and to enable dismounting the device from the mounting base 110.

Figure 2 illustrates the mounting base 110, the mounting adapter 120 and the installation key 130 in an exemplifying arrangement, where these elements of the mounting system 100 are brought together. In particular, in the illustration of Figure 2 the installation key 130 is attached to the mounting adapter 120 and it is applicable for bringing the mounting adapter 120 to its mounting position on a mounting plate 111 of the mounting base 110 or removing the mounting adapter 120 from its mounting position on the mounting plate 111. The arrangement shown in the illustration of Figure 2 may pertain to moving the mounting adapter 120 via movement of the installation key 130 to bring the mounting adapter 120 into with the mounting position on the mounting plate 111 or to dismount the mounting adapter 120 from the mounting plate 111. Various examples regarding structure and functionality of the installation base 110, the mounting adapter 120 and the installation key 130 are provided in the following.

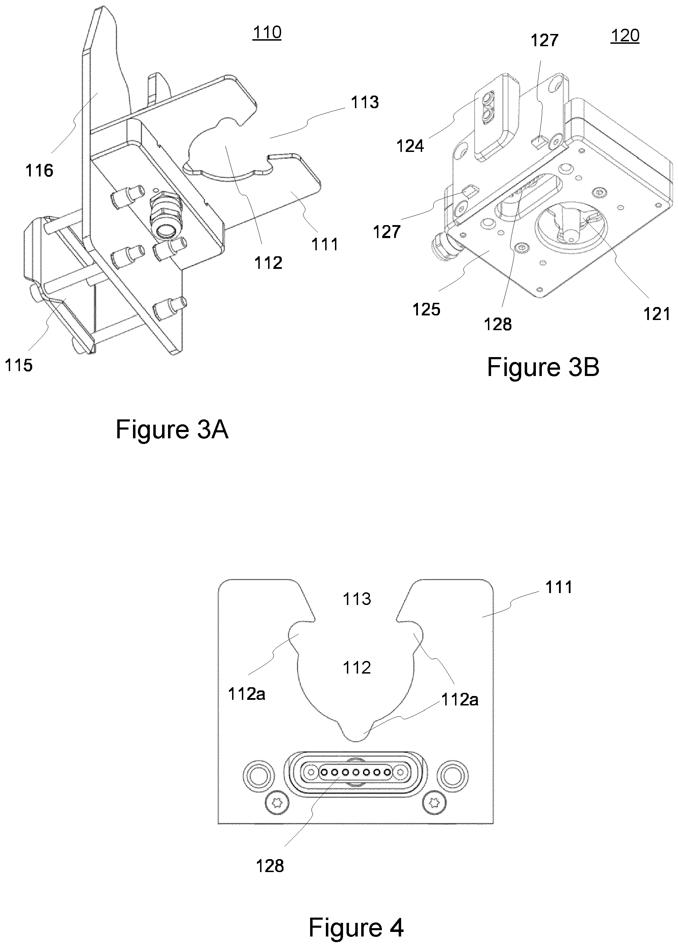

The exemplifying mounting base 110 illustrated in Figure 1A is shown from a different viewing angle in Figure 3A, whereas the exemplifying mounting adapter 120 illustrated in Figure 1B is shown from a different viewing angle in Figure 3B. The mounting base 110 comprises a mounting plate 111 for supporting the mounting adapter 120 of the device, whereas the mounting adapter 120 comprises a mounting surface 125, which is positioned against the mounting plate 111 when the mounting adapter 120 (and hence the device) is in the mounting position on the mounting plate 111.

The mounting base 110 and/or the mounting adapter 120 may comprise respective one or more further elements that facilitate mounting the mounting adapter 120 of the device on the mounting base 110 in a predefined lateral alignment between the mounting base 110 and the mounting adapter 120. As an example in this regard, the mounting base 110 may comprise a mounting flange 116 that extends from the plane of the mounting plate 111 in a substantially right angle with respect to the mounting plate 111 and the installation adapter 120 may comprise a secondary mounting surface 126 for placement against the mounting flange 116 when the installation adapter 120 is in the mounting position on the mounting plate 111. In this regard, a contact between the mounting flange 116 and the secondary mounting surface 126 may prevent rotation of the mounting adapter 120 with respect to the mounting base 110, which facilitates bringing the mounting adapter 120 on the mounting plate 111 in the predefined lateral alignment with respect to the mounting base 110.

According to an example, the mounting base 110 comprises an attachment mechanism 115 to enable attaching the mounting base 110 to a supporting structure, such as a pole, a post, a wall, etc. According to another example, the mounting base 110 is provided as an integral part of the supporting structure. In both these scenarios the mounting base 110 may be provided for installation at a height that enables mounting the device at a desired height from the ground level. In an exemplifying arrangement, the mounting base 110 is attached to a supporting structure at an installation height that results in the device being arranged at a height that is not directly accessibly by a human operator from the ground level (e.g. at a height in a range from two to ten meters from the ground level) when mounted to the mounting base 110. Such a height is typically suitable e.g. for surveillance cameras, for sensor apparatuses applied for measuring air quality, for sensor apparatuses applied for measuring meteorological information such as roadside weather stations, for network elements of a wireless communication network, for light fixtures, etc. in view of their operation at the site, whereas such a height is further advantageous in limiting unintended and/or unauthorized access to the device.

As described in the foregoing, the mounting adapter 120 may be provided as part of the device or as an element attached to the device. The mounting surface 125 of the adapter 120 comprises a recess 121 for receiving a locking member 133 that is arranged in a first end of the shaft 131 of the installation key 130. The mounting adapter 120 also comprises a locking mechanism arranged to secure the installation key 130 to the mounting adapter 120 upon receiving the locking member 133 in the recess 121 and to release the installation key 130 from the mounting adapter 120 upon rotation of the shaft 131 about its axis with respect to the mounting adapter 120. In an example, the first end of the shaft 131 is substantially aligned with the mounting surface (125) when the installation key 130 is secured to the mounting adapter 120 via operation of the locking mechanism, whereas in another example, a segment of the shaft 111 also enters the recess 121 upon securing the installation adapter 130 to the mounting adapter 120. In the latter example, the length of the portion of (the first end of) the shaft 131 that enters the recess 121 when secured to the interface portion 120 may be referred to as a locking depth.

The locking mechanism may be implemented in any suitable manner known in the art, as far as it complies with the functional requirements described in the foregoing and in the following. The locking mechanism is arranged to engage the locking member 133 upon receiving it in the recess 121, thereby securing the installation key 130 to the mounting adapter 120. The locking mechanism is also arranged to disengage the locking member 133 upon rotation of the shaft 131 about its axis with respect to the mounting adapter 120, thereby releasing the installation key 130 from the mounting adapter 120.

The one or more radially extending protrusions 132 provided in the shaft 131 of the installation key 130 are arranged at a predefined distance from the first end of the shaft 131 and it extends over a predefined length along the shaft 131. The portion of the shaft 131 provided with the one or more radially extending protrusions 132 may be referred to as an extension segment (of the shaft 131), which covers a portion of the predefined length along the shaft 131 and which is positioned at the predefined distance from the first end of the shaft 131. The predefined distance substantially matches the thickness of the mounting plate 111 and the possible (non-zero) locking depth for the reason(s) discussed in further detail in the following. Due to the one or more radially extending protrusions 132 provided therein, the extension segment comprises at least one (physical) feature that extends beyond the substantially circular cross-section of the shaft 131.

Referring now back to the mounting plate 111 of the mounting base 110, Figure 4 illustrates the mounting plate 111 from a viewing angle different from that of Figures 1A and 3A. The mounting plate 111 is provided therein has an opening 112 therethrough, where the opening 112 allows for longitudinal movement of the shaft 131 of the installation adapter 130 through the mounting plate 111. In this regard, the opening 112 has an outline that is matched with the cross-section of the substantially tubular shaft 131 to enable moving the shaft 131 through the opening 112 in the mounting plate 111 in the following manner:
- The outline of the opening 112 has a shape that allows for the one or more radially extending protrusions 132 of the extension segment of the shaft 131 to pass through the opening 112 in at least one (radial) orientation of the shaft 131 with respect to the mounting plate 111. Consequently, the shape of the outline of the opening 112 implicitly allows for other parts of the substantially tubular shaft 131 to pass through the opening 112 in any (radial) orientation of the shaft 131 with respect to the mounting plate 111.
- The outline of the opening 112 has a shape that prevents rotation of the shaft 131 when the extension segment of the shaft 131 is (longitudinally) aligned with the mounting plate 111.
- The outline of the opening 112 has a shape that allows for rotation of the shaft 131 when the extension segment of the shaft 131 is not (longitudinally) aligned with the mounting plate 111.

Hence, due to the placement of the extension segment in the shaft 131, rotation of the shaft 131 within the opening 112 is enabled when the distance between the mounting adapter 120 temporarily attached to the shaft 131 and the mounting plate 111 is longer than the sum of the predefined distance and the predefined length (described above) and when the mounting surface 125 of the mounting adapter 120 is brought to a contact with the mounting plate 111. In the latter position of the mounting adapter 120, the predefined distance from the extension segment to the first end of the shaft 111 matching the thickness of the mounting plate 111 ensures that rotation of the shaft 131 within the opening 112 is enabled when the mounting adapter 120 is brought into the mounting position on the mounting plate 111. In contrast, rotation of the shaft 131 within the opening 112 is prevented when the distance between the mounting adapter 120 temporarily attached to the shaft 131 and the mounting plate 111 is smaller than the sum of the predefined distance and the predefined length to prevent accidental release of the mounting adapter 120 from the installation key 130 before the mounting adapter 120 is brought into the mounting position on the mounting plate 111 (when mounting) or brought to a sufficient distance from the mounting plate 111 (when dismounting).

The mounting plate 111 further comprises a cut-out 113 that connects the opening 112 to a perimeter of the mounting plate 111, where the cut-out 113 has a width that allows for bringing the shaft 131 into the opening 112 by lateral movement. In an example, the cut-out 113 has a substantially constat width that substantially matches or that is slightly wider than the diameter of the shaft 131, whereas in another example (as illustrated in Figures 1A and 3A) the cut-out 113 widens towards the perimeter of the mounting plate 111 with its narrowest part having a width that substantially matches or that is slightly wider than the diameter of the shaft 131. In other words, the cut-out 113 and the opening 112 together form an indentation arranged on the side of the mounting plate 111, where the cut-out 113 enables bringing the shaft 131 of the installation adapter 130 into the opening 112 by lateral movement to allow for longitudinal movement of the shaft 131 through the mounting plate 111.

The opening 112 has a circular core portion to allow the substantially circular shaft 131 to move through the mounting plate 111, whereas the circular core portion is extended by a respective radially extending notch 112a for each of the one or more radially extending protrusions 132 provided in the extension segment of the shaft 131. In this regard, each radially extending notch 112a has a shape and size that enables accommodating a respective one of the one or more radially extending protrusions 132 of the shaft 131 with the radially extending notches 112a distributed along the circumference of the circular portion of the opening 112 with a spacing that matches that applied for the one or more radially extending protrusions 132 of the shaft 131.

In an example, the extension segment of the shaft 131 is provided with N radially extending protrusions 132 that are similar to each other in shape and size and that are substantially evenly distributed along the circumference of the shaft 131, whereas each of the notches 112a radially extending from the circular core portion of the opening 112 has a shape and size that match those of the radially extending protrusions 132 and the radially extending notches 112a are substantially evenly distributed along the circumference of the circular core portion. Consequently, the extension segment of the shaft 131 is moveable through the opening 112 in N different orientations with respect to the mounting plate 111. The examples shown in the illustrations of the present disclosure provide an example, where the mounting plate 111 is provided with the opening 112 having N=3 notches 112a radially extending from its circular core portion, thereby enabling movement of the extension segment through the opening 112 in three different orientations with respect to the mounting plate 111.

In a variation of the example illustrated in Figures 1A, 3A and 4, the N radially extending protrusions 132 of similar shape and size are non-evenly distributed along the circumference of the shaft 131 with the radially extending notches 112a distributed accordingly along the circumference of the circular core portion of the opening 112, whereas in another variation the N radially extending protrusions 132 are not similar in shape and/or size with the radially extending notches 112a of the opening 112 having respective shapes and sizes. Both these variations provide at least one but less than N different orientations of the shaft 131 that enable the extension segment moving through the opening 112 (depending on the applied distribution and/or respective shapes and sizes of the one or more radially extending protrusions 132 and the radially extending notches 112a).

The locking mechanism provided in the mounting adapter 120 is arranged to secure the installation key 130 to the mounting adapter 120 in an orientation that enables the extension segment of the shaft 131 to pass through the opening 112 provided in the base plate 111 when the mounting adapter 120 is in a predefined lateral alignment with respect to the mounting base 110. In this regard, the locking mechanism enables securing the installation key 130 to the mounting adapter 120 in an orientation that aligns the one or more radially extending protrusions 132 of the extension segment with the respective radially extending notches 112a of the opening 112 when the mounting adapter 120 is in the predefined lateral alignment with respect to the mounting base 110. In an example, this is accomplished by shaping the locking member 133 arranged in the first end of the shaft 131 and the recess 121 provided in the interface portion 120 such that the locking member 133 can enter the recess 121 only in an orientation that ensures alignment of the one or more radially extending protrusions 132 with the respective radially extending notches of the opening 112 when the mounting adapter 120 is in the predefined lateral alignment with respect to the mounting base 110. In another example, the locking mechanism is arranged to secure the installation key 130 to the mounting adapter 120 only in an orientation that ensures alignment of the one or more radially extending protrusions 132 with the respective radially extending notches 112a of the opening 112 when the mounting adapter 120 is in the predefined lateral alignment with respect to the mounting base 110.

In an example, the mounting base 110 and the mounting adapter 120 are provided with respective features that facilitate mounting the mounting adapter 120 to the mounting base 110 in the predefined lateral alignment, i.e. mounting the mounting adapter 120 on the mounting plate 111 in a predefined lateral position and orientation to ensure robust and reliable mounting of the device. As an example in this regard, the (optional) mounting flange 116 of the mounting base 110 and the secondary mounting surface 126 of the mounting adapter 120 described in the foregoing constitute such lateral-alignment-facilitating features. In this regard, the secondary mounting surface 126 has a shape that matches that of a mounting-adapter-facing surface of the mounting flange 115 to maintain the predefined lateral alignment between the installation adapter 120 and the mounting base 110 when the secondary mounting surface 126 is brought into contact with the mounting flange 116. In an example, the mounting flange 116 and the secondary mounting surface 126 are designed such that the rotation-preventing contact between these two entities is established only when the distance between the mounting adapter 120 temporarily attached to the shaft 131 and the mounting plate 111 is shorter than the sum of the predefined distance and the predefined length (i.e. when the extension segment of the shaft 131 is aligned with the mounting plate 111 or when the mounting adapter 120 is brought into contact with the mounting plate 111) to facilitate avoiding accidental release of the installation key 130 from the mounting adapter 120 via rotation of the shaft 131.

In a further example, the secondary mounting surface 126 is provided with a protrusion 124 that extends in a direction that is intended for substantially perpendicular orientation with respect to the mounting plate 111 when the mounting adapter 120 is mounted on the mounting plate 126, whereas the mounting flange 116 is provided with a slot 114 that extends in a direction that is substantially perpendicular to the mounting plate 111. The slot 114 has a shape suitable for receiving the protrusion 124 and the slot 114 is positioned such that it is aligned with the protrusion 124 when the mounting adapter 120 is in the predefined lateral alignment with respect to the mounting base 110. Consequently, the protrusion 124 enters the slot 114 when the mounting adapter 120 is brought towards the mounting plate 111 in the predefined lateral alignment with respect to the mounting base 110 from a direction that is substantially perpendicular to the mounting plate 111, the slot 114 and the protrusion 124 thereby helping to achieve and maintain the predefined lateral alignment of the mounting adapter 120 with respect to the mounting base 110. The slot 114 may have a shape that narrows towards the bottom of the slot with the bottom of the slot having a shape and size that match those of the protrusion 124, the shape of the slot 114 thereby serving to guide the mounting adapter 120 towards the predefined lateral alignment with respect to the mounting base 110 upon moving the mounting adapter 120 towards the mounting plate 111.

In a variation of the above-described example, the mounting flange 116 is provided with a protrusion that extends in a direction that is substantially perpendicular to the mounting plate 111, whereas the secondary mounting surface 126 is provided with a slot that extends in a direction that is intended for substantially perpendicular orientation with respect to the mounting plate 111 when the mounting adapter 120 is mounted on the mounting plate 111. As in the example described above, the slot has a shape suitable for receiving the protrusion and the slot is positioned such that it is aligned with the protrusion when the mounting adapter is in the predefined lateral alignment with respect to the mounting base 110. Consequently, the protrusion enters the slot when the mounting adapter 120 is brought towards the mounting plate 111 in the predefined lateral alignment with respect to the mounting base 110 from a direction that is substantially perpendicular to the mounting plate 111, the slot and the protrusion thereby helping to achieve and maintain the predefined lateral alignment of the mounting adapter with respect to the mounting base 110. As in the above-described example, the slot may have a shape that narrows towards its bottom with the bottom of the slot having a shape and size that match those of the protrusion, the shape of the slot thereby guiding the mounting adapter 120 towards the predefined lateral alignment with respect to the mounting base 110 upon moving the mounting adapter 120 towards the mounting plate 111.

The protrusion may have a shape that widens towards the mounting plate 111 with the narrow end of the protrusion having a shape and size that match those of the bottom of the slot,

According to an example, the mounting adapter 120 comprises one or more retractable latches 127 and the mounting flange 116 comprises one or more apertures 117 for receiving corresponding ones of the retractable latches 127. Hence, the one or more apertures 117 provided in the mounting flange 116 have respective shapes and sizes that enable receiving the corresponding retractable latches 127 therein. The one or more retractable latches 127 are provided in the secondary mounting surface 126 in respective positions that are spatially aligned with the corresponding ones of the one or more apertures 117 provided in the mounting flange 116 when the mounting adapter 120 is in its mounting position on the mounting plate 111.

The one or more retractable latches 127 are arranged to retract in response to securing the installation key 130 to the mounting adapter 120, e.g. in response to the locking mechanism in the mounting adapter 120 engaging locking member 133 of the installation key 130. The one or more retractable latches 127 are arranged to extend in response to releasing the installation key from the mounting adapter 120, e.g. in response to the locking mechanism in the installation adapter disengaging the locking member 133 of the installation key 130.

According to an example, the mounting base 110 comprises a first electrical connector 118 and the mounting adapter 120 comprises a second electrical connector 128, the first and second electrical connectors 118, 128 positioned such that they are brought into a galvanic contact with each other when the mounting adapter 120 is positioned in the mounting position on the mounting plate 111. In an example, the first electrical connector 118 is provided on the mounting plate 111 and the second electrical connector 128 is provided on the mounting surface 125 of the mounting adapter 120 (as illustrated in Figures 1A and 3B), whereas in another example the first electrical connector 118 is positioned in the mounting flange 116 and the second electrical connector 128 is positioned in the secondary mounting surface 126. The galvanic (electrical) contact between the first and second electrical connectors 118, 128 may be provided to supply operating power, control information and/or data to the (electronic) device mounted to the mounting base 110 via the mounting adapter 120 and/or to receive status information and/or (measurement) data from the (electronic) device. In examples where the first and second electrical connectors 118, 128, respectively, in the mounting base 110 and in the mounting adapter 120 are not provided, the (electronic) device mounted via operation may obtain operating power by other means, e.g. from a battery included in the (electronic) device or from a solar panel provided as part of the device, whereas the information and/or data between the device and external entities may be exchanged via wireless communication means.

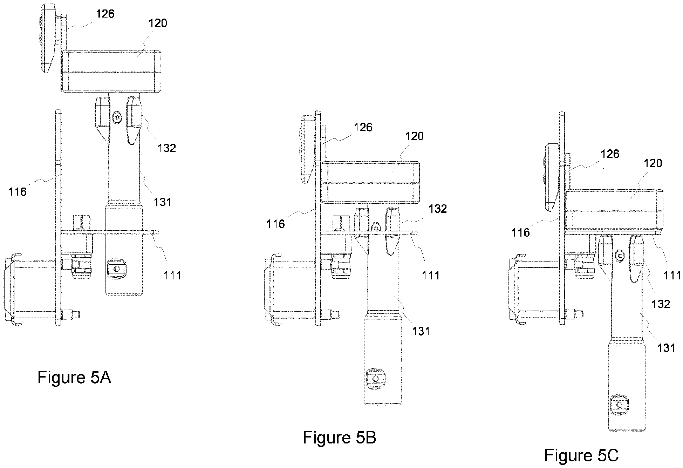

Figures 5A, 5B and 5C illustrate different longitudinal positions of the shaft 131 of the installation key 130 with respect to the mounting plate 111. In this regard, Figure 5A illustrates a situation where the shaft 131 is brought into the opening 112 but where the one or more radially extending protrusions 132 of the extension segment of the shaft 131 are not aligned with the mounting plate 111. Hence, the shaft 131-and the mounting adapter 120 temporarily attached thereto - are rotatable with respect to the mounting base 110. However, since the mounting adapter 120 is not in a position where the mounting base 110 prevents its rotation, the mounting adapter 120 rotates together rotation of the shaft 131 and, consequently, no rotation of the shaft 131 with respect to the mounting adapter 120 required for releasing the installation key 130 from the mounting adapter 120 takes place despite rotation of the shaft 131. In this scenario, rotation of the mounting adapter 120 along with rotation of the shaft 131 is advantageous to allow for adjusting lateral orientation of the mounting adapter 120 with respect to the mounting base 110 to enable bringing the mounting adapter 120 to the predefined lateral orientation with respect to the mounting base 110 when mounting the device.

Figure 5B illustrates a situation where the shaft 131 is longitudinally moved with respect to the mounting plate 111 such that the one or more radially extending protrusions 132 of the extension segment of the shaft 131 are aligned with the mounting plate 111. In this scenario, the contact between the secondary mounting interface 126 of the mounting adapter 120 and the mounting flange 116 of the mounting base 110 prevents rotation of the mounting adapter 120 upon (attempted) rotation of the shaft 131. However, due to the alignment of the extension segment and the mounting plate 111, the one or more radially extending protrusions 132 of the extension segment are positioned within the respective radially extending notches 112a of the opening 112, thereby preventing rotation of the shaft 131 with respect to the mounting adapter 120 that would otherwise release the installation key 130 therefrom. In this scenario, the installation key 130 cannot be accidentally released from the mounting adapter 120 when it is close to its mounting position on the mounting plate 111 but yet not properly arranged on the mounting plate 111.

Figure 5C illustrates a situation where the mounting adapter 120 is positioned on its position on the mounting plate 111. In this scenario the contact between the secondary mounting interface 126 of the mounting adapter 120 and the mounting flange 116 of the mounting base 110 prevents rotation of the mounting adapter 120 upon rotation of the shaft 131, whereas the extension segment of the shaft 131 is not aligned with the mounting plate 111. Consequently, rotation of the shaft 131 with respect to the mounting plate 111 and with respect to the mounting adapter 120 is possible and rotation of the shaft 131 releases the installation key 130 from the mounting adapter 120. In this scenario, the mounting adapter 120 is properly positioned on the mounting plate 111 and the rotation of the shaft 131 in order to release the installation key 130 from the mounting adapter 120 can be allowed.

A user may directly operate the installation key 130 for mounting the mounting adapter 120, and hence the device to which the mounting adapter 120 is attached or integrated, to the mounting base 110 and for dismounting the mounting adapter 120 (and the device) from the mounting base 110, provided that the shaft 131 of the installation key 130 is long enough in consideration of the installation height of the mounting base 110. Alternatively, the user may operate installation key 130 via a mast or an extension shaft attached to the installation key 130 in case the installation height of the mounting base 110 is too high for direct access to the installation adapter 120 e.g. from the ground level.

In various examples, the device mounted via application of the mounting system 100 may comprise any electronic device that useable for a prolonged time in field conditions but that nevertheless requires subsequent maintenance, such as cleaning or replacement of its components, in the course of its operation. Non-limiting examples of such electronic devices include a surveillance camera, a sensor apparatus for measuring air quality, a sensor apparatus for measuring meteorological information (e.g. a roadside weather stations), a network element of a wireless communication network, a light fixture, etc.

Structural and/or operational features of the mounting system 100 described via the examples provided in the foregoing are not to be construed as limitations to the mounting system 100 according to the present disclosure or to elements thereof. In particular, the structural and/or operational features set forth in an example that is described independently of other examples may be provided in isolation from those of other examples or in combination of those described in one or more other examples without departing from the scope of the mounting system 100 according to the present disclosure.

## Claims

1. A system (100) for releasably mounting a device, the system (100) comprising:
a mounting base (110) and a mounting adapter (120) of the device, the mounting base (110) comprising mounting plate (111) for supporting the mounting adapter (120) and the mounting adapter (120) comprising a mounting surface (125) for placement against the mounting plate (111) when the mounting adapter (120) is mounted to the mounting base (110); and
an installation key (130) for temporary attachment to the mounting adapter (120) for moving the device, the installation key (130) comprising a substantially tubular shaft (131) provided with an extension segment that covers a portion of a predefined length along the shaft (131) at a predefined distance from its first end and comprises one or more radially extending protrusions (132),
wherein the mounting surface (125) comprises a recess (121) for receiving a locking member (133) arranged in the first end of the shaft (131) and a locking mechanism arranged to secure the installation key (130) to the mounting adapter (120) upon receiving the locking member (133) and arranged to release the installation key (130) upon rotation of the shaft (131) with respect to the mounting adapter (120), and
wherein the mounting plate (111) has an opening (112) to allow for longitudinal movement of the shaft (131) therethrough, the opening (112) having an outline that allows for the one or more radially extending protrusions (132) to pass through the opening (112) in at least one orientation of the shaft (131), that prevents rotation of the shaft (131) when the extension segment is aligned with the mounting plate (111) and that allows for rotation of the shaft (131) when the extension segment is not aligned with the mounting plate (111).

2. A system (100) according to claim 1, wherein the locking mechanism is arranged to engage the locking member (133) upon receiving it in the recess (121) and to disengage the locking member (133) upon rotation of the shaft (131) with respect to the mounting adapter (120).

3. A system (100) according to claim 1 or 2, wherein the locking mechanism is arranged to secure the installation key (130) to the mounting adapter (120) in an orientation that enables the extension segment of the shaft (131) to pass through the opening (112) when the mounting adapter (120) is in a predefined lateral alignment with respect to the mounting base (110).

4. A system (100) according to any of claims 1 to 3, wherein the opening (112) through the mounting plate (111) has a substantially circular core portion to allow for longitudinal movement of the shaft (131) through the mounting plate (111), complemented with a respective radially extending notch (112a) for each of the one or more radially extending protrusions (132) of the shaft (131).

5. A system (100) according to any of claims 1 to 4, wherein the opening (112) through the mounting plate (111) is provided with a cut-out (113) that connects the opening (112) to a perimeter of the mounting plate (111) to enable bringing the shaft (131) of the installation key (130) into the opening (121) by lateral movement.

6. A system (100) according to any of claims 1 to 5,
wherein the installation base (110) comprises a mounting flange (116) that extends from a plane of the mounting plate (111) in a substantially right angle and the installation adapter (120) comprises a secondary mounting surface (126) for placement against the mounting flange (116) when the mounting adapter (120) is mounted to the mounting base (110),
where a contact between the mounting flange (116) and the secondary mounting surface (126) prevents rotation of the installation adapter (120) with respect to the mounting base (110), thereby ensuring a predefined lateral alignment between the mounting adapter (120) and the mounting base (110).

7. A system (100) according to claim 6, wherein one of the following applies
the secondary mounting surface (126) comprises a protrusion (124) that extends in a direction that is intended for substantially perpendicular orientation with respect to the mounting plate (111) when the mounting adapter (120) is mounted thereon and the mounting flange (116) comprises a slot (114) extending in a direction that is substantially perpendicular to the mounting plate (111) and having a shape suitable for receiving the protrusion (124), the slot (114) positioned such that it is aligned with the protrusion (124) when the mounting adapter (120) is in the predefined lateral alignment with respect to the mounting base (110), or
the mounting flange (116) comprises a protrusion that extends in a direction that is substantially perpendicular to the mounting plate (111) and the secondary mounting surface (126) comprises a slot that extends in a direction that is intended for substantially perpendicular orientation with respect to the mounting plate (111) when the mounting adapter (120) is mounted thereon and the slot has a shape suitable for receiving the protrusion, the slot positioned such that it is aligned with the protrusion when the mounting adapter is in the predefined lateral alignment with respect to the mounting base (110).

8. A system (100) according to claim 6 or 7,
wherein the mounting adapter (120) comprises one or more retractable latches (127) and the mounting flange comprises one or more apertures (117) for receiving corresponding ones of the one or more retractable latches (127), the one or more retractable latches (127) provided in respective positions of the secondary mounting surface (126) that are spatially aligned with corresponding ones of the one or more apertures (117) when the mounting adapter (120) is mounted to the mounting base (110), and
wherein the one or more retractable latches (127) are arranged to retract in response to securing the installation key (130) to the mounting adapter (120) and arranged to extend in response to releasing the installation key (130) from the mounting adapter (120).

9. A system (100) according to any of claims 1 to 8, wherein the mounting base (110) comprises a first electrical connector (118) and the mounting adapter (120) comprises a second electrical connector (128), where the first and second electrical connectors (118, 128) are positioned such that they are brought into a galvanic contact with each other when the mounting adapter (120) is brought into a contact with the mounting plate (111) in a predefined lateral alignment with respect to the mounting base (110).

10. A system (100) according to any of claims 1 to 10, further comprising the device attached to the interface portion (110).

11. A system (100) according to claim 10, wherein the device comprises one of the following:
a surveillance camera,
a sensor apparatus for measuring air quality,
a sensor apparatus for measuring meteorological information,
an element of a wireless mobile communication network,
a light fixture.
